# EUROPEAN PATENT SPECIFICATION

(11) **EP 2 214 359 B1**
(45) Date of publication and mention of the grant of the patent: **26.10.2016**
(21) Application number: 08773136.0
(22) Date of filing: 08.07.2008
(51) Int. Cl.: H04W 28/16, H04L 12/70

(54) **A POLICY CONTROL METHOD AND SYSTEM FOR LAYER TWO DEVICES**
RICHTLINIENKONTROLLVERFAHREN UND SYSTEM FÜR EINE SCHICHT-ZWEI-EINRICHTUNG
PROCÉDÉ ET SYSTÈME DE COMMANDE DE POLITIQUE POUR DISPOSITIF DE COUCHE DEUX

(30) Priority: 30.10.2007 CN 200710163760
(43) Date of publication of application: 04.08.2010
(73) Proprietor: ZTE Corporation, Shenzhen, Guangdong 518057 (CN)
(72) Inventor: SUN, Mo, Shenzhen Guangdong 518057 (CN); SHI, Xiaofeng, Shenzhen Guangdong 518057 (CN)
(74) Representative: Regimbeau
(86) International application number: PCT/CN2008/071582
(87) International publication number: WO 2009/056013

(56) References cited:
- CN-A- 1 674 576
- CN-A- 1 968 177
- CN-A- 101 159 599
- US-A1- 2006 245 426
- "Telecommunications and Internet Converged Services and Protocols for Advanced Networking (TISPAN); Resource and Admission Control Sub-system (RACS); Functional Architecture; Release 2 DTS/TISPAN-02036-NGN-R2", ETSI DRAFT; DTS02036V022 RACS-R2_11TTD043R2_CLEAN, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.2.2, 9 January 2007 (2007-01-09), pages 1-76, XP014054546, [retrieved on 2007-01-09]

## Description

### TECHNICAL FIELD

The present invention relates to the field of communications, especially to a policy control method and system for layer two devices.

### BACKGROUND

Next Generation Network (NGN) brings a protruding problem in Quality of Service (QoS) aspect due to the adoption of packet-switched technique, especially Internet Protocol (IP) technique in the carrier network.

Resource and Admission Control Subsystem (RACS) is a subsystem proposed by European Telecommunications Standards Institute (ETSI) to solve the QoS problem of NGN carrier network.

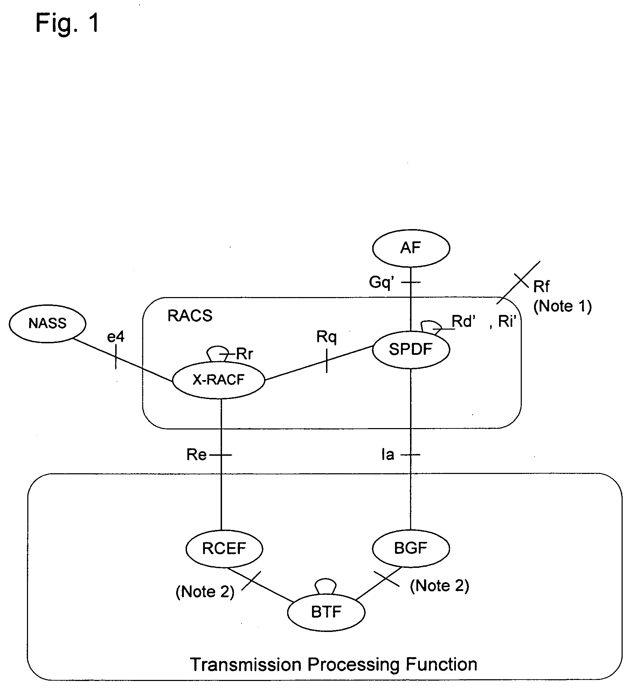

In the latest RACS draft publicized in June 2007 by ETSI Telecommunications and Internet converged services and protocols for advanced networking (TISPAN), functional architecture of RACS is provided, as shown in Fig. 1, wherein:
Service-based Policy Decision Function (SPDF) requests to select local policy according to resource request from Application Function (AF), and maps the request to IP QoS parameters, then sends the parameters to generic Resource and Admission Control Function (x-RACF) and Border Gateway Function (BGF) to request for corresponding resource.

x-RACF receives the request from SPDF, and performs admission control based on the stored policy, accepting or rejecting the request of transmitting resource. X-RACF can obtain network attachment information and user QoS subscription information from Network Attachment Sub-System (NASS) via e4 reference point, so that available network resources can be determined according to network location information (e.g., physical node address of an accessed user), and the user QoS subscription information can be referred to when resource distribution request is being processed.

BGF is located between the access network and the core network (implementing core border gateway function), or BGF can be a gateway between two core networks. BGF accomplishes functions of Network Address Translation (NAT), gating, QoS label, bandwidth limitation, utilization measurement and resource synchronization under the control of SPDF.

Resource Control Enforcement Function (RCEF) is located at IP Edge Node of access network or access network layer two devices (e.g., Digital Subscriber Line Access Multiplexer (DSLAM), Ethernet switch), performing the policy transmitted by x-RACF via Re reference point, and accomplishing functions of gating, QoS label, bandwidth limitation and so on.

Basic Transmission Function (BTF) is a function entity located in transport layer for processing multicast replication, routing and so on.

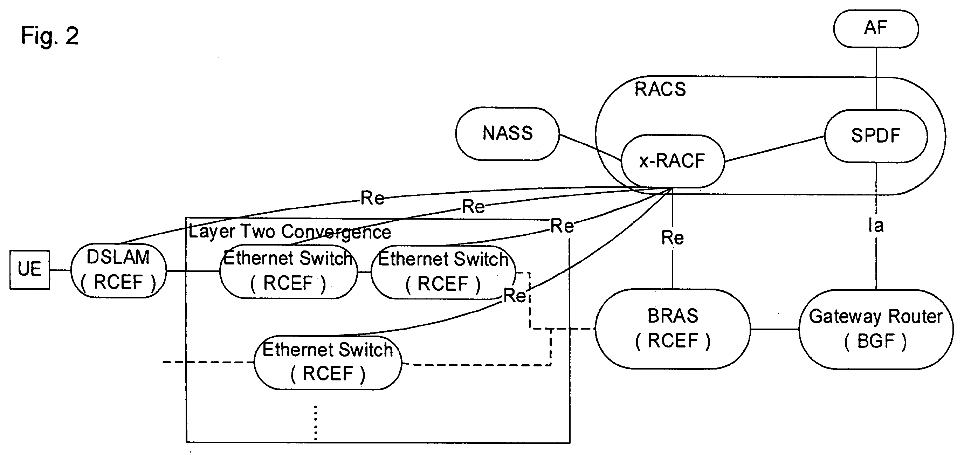

In order to guarantee QoS of a user service flow in the access network, after making policy decision according to resource request of the service flow , RACS must send the policy down to all network elements that the service flow passes through in the access network, including the gateway, IP Edge Node and layer two devices in convergence level. As shown in Fig. 2, it is a diagram illustrating policy control in a Digital Subscriber Line (DSL) access network.

As to a layer three device such as IP Edge Node (e.g., Broadband Remote Access Server (BRAS)), RACS directly sends down and enforces the content of a layer three control policy via a Re interface through RACF; as to a gateway router, it is SPDF that sends down and enforces the layer three device policy via an la interface.

As to layer two devices of convergence level (e.g., Ethernet switch and DSLAM), the existing technique is to predefine some layer two device policies in these devices, and RACS sends down the layer two device policy ID via Re interface to activate or deactivate the policy for enforcement.

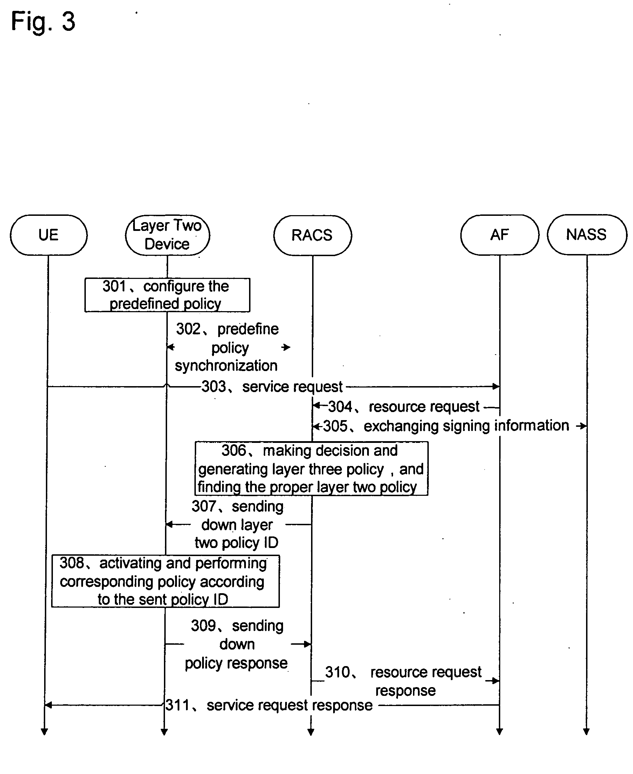

The existing policy control process of a layer two device is shown in Fig. 3:
step 301, firstly, configuring some possible predefined policies for the layer two device ;
step 302, when making a policy decision, RACS has to know which predefined policies are available, so the predefined policies of this layer two device should be synchronous with RACS, and the synchronization can be implemented through messages or synchronization configuration;
step 303, User Equipment (UE) initiates a service request to AF;
step 304, AF initiates a resource request to RACS according to the required resource of service;
step 305, RACS and NASS exchange subscription information of the user;
step 306, RACS makes the final admission decision according to subscription information and current resource status, and selects a proper layer two predefined policy, and generates a layer three control policy;
step 307, RACS sends ID of the layer two device policy down to the layer two device;
   (note: the process of sending layer three device policy down to IP Edge Node and BGF is omitted here;)
step 308, the layer two device activates corresponding predefined policy according to the layer two device policy ID sent down;
step 309, the layer two device returns a sending down policy response to RACS;
step 310, RACS returns a resource request response to AF;
step 311, AF returns a service request response to UE.

There are several problems in the existing policy control technique of layer two devices as follows:
(1) with so many layer two convergence level devices and more and more types of services provided by the service provider, differentiation service is becoming more and more intensive, and the number of predefined policies will also be increasing, so it is rather difficult for service providers to configure a number of predefined policies for numerous devices, and the maintenance cost will also be very high;
(2) there is not a specific scheme in the protocol yet for the RACS as how to send a layer two device policy to a layer two device. Since there are many layer two convergence level devices, it is impossible for RACS to connect directly with all the devices for policy control, so a method for distributing a layer two device policy to the corresponding layer two device is required.

"Telecommunications and Internet Converged Services and Protocols for Advanced Networking (TISPAN); Resource and Admission Control Subsystem (RACS); Release 2 DTS/TISPAN-02036-NGN-R2" discloses that A-RACF in the RACF shall be capable of: attaching a pre-defined traffic policy to the media flow(s), the A-RACF provides a policy-id, which will be translated into specific traffic policies to be applied."

### SUMMARY

The technical problem the present invention aims to solve is to provide a policy control method and system for layer two devices, so as to solve the problem in existing technique that it is difficult to use predefined policies, and that RACS can not directly send a layer two device policy down to the corresponding layer two device.

To solve the above problem, the present invention provides a policy control method of layer two devices, comprising:
a Resource and Admission Control Subsystem (RACS) of Telecoms & Internet converged Services & Protocols for Advanced Networks (TISPAN) dynamically generates the layer two device policy according to resource request, user subscription information and resource availability status obtained from transport layer function;
wherein the layer two device policy comprises: a policy ID used to identify the policy uniquely, a policy type identifying the policy as a layer two policy or a layer three policy, a user ID used for uniquely determining the user (IP address, Mac address), a flow description, Quality of Service (QoS) information and gating information;
the RACS sends the layer two device policy down to an IP Edge Node; and
the IP Edge Node notifies the layer two device of the layer two device policy;
the layer two device receives and enforces the layer two device policy.

Further, a policy distributing function of the IP Edge Node notifies the layer two device of the layer two device policy;

Further, the IP Edge Node is a Broadband Remote Access Server (BRAS), and the layer two device is an Ethernet switch.

Further, the RACS sends the layer two device policy down to the IP Edge Node by generic Resource and Admission Control Function (x-RACF) via Re interface.

Further, the RACS generates a layer three device policy dynamically according to resource request, user subscription information and resource availability status obtained from transport layer function;

the RACS sends the layer two device policy and the layer three device policy, which are organized in one message or in different messages respectively, down to the IP Edge Node.

Further, after the IP Edge Node has received the layer two device policy, according to information in the policy and networking status of the layer two network connected to IP Edge Node, the policy distributing function sends the layer two device policy down to corresponding layer two device via Re' interface by taking use of layer two control mechanism, and the layer two control mechanism is an access node control protocol.

Further, the Resource Control Enforcement Function (RCEF) of the layer two device enforces the layer two device policy.

To solve the above problem, the present invention also provides a policy control system for layer two devices, comprising:
a Resource and Admission Control Subsystem (RACS) of Telecoms & Internet converged Services & Protocols for Advanced Networks (TISPAN) and a layer two device, and further comprising an IP Edge Node;
the RACS is configured to generate the layer two device policy dynamically and send the layer two device policy down to the IP Edge Node according to a resource request, user subscription information and a resource availability status obtained from a transport layer function;
wherein the layer two device policy comprises: a policy ID used to identify the policy uniquely, a policy type identifying the policy as a layer two policy or a layer three policy, a user ID used for uniquely determining the user (IP address, Mac address), a flow description, Quality of Service (QoS) information and gating information;
the IP Edge Node is configured to notify the layer two device of the layer two device policy;
the layer two device is configured to receive and enforce the layer two device policy.

Further, the IP Edge Node comprises a policy distributing function, which is used for notifying the layer two device of the layer two device policy.

Further, the IP Edge Node is a Broadband Remote Access Server (BRAS), and the layer two device is an Ethernet switch.

Further, the RACS is used for sending the layer two device policy down to the IP Edge Node by generic Resource and Admission Control Function (x-RACF)via Re interface.

Further, the RACS is also used for generating a layer three device policy dynamically according to resource request, user subscription information and resource availability status obtained from the transport layer function;
the RACS is also used for sending the layer two device policy and layer three device policy, which are organized in one message or in different messages respectively, down to the IP Edge Node.

Further, after the IP Edge Node has received the layer two device policy, according to information in the policy and networking status of the layer two network connected to IP Edge Node, the policy distributing function sends the layer two device policy down to corresponding layer two device via Re' interface by taking use of layer two control mechanism, and the layer two control mechanism is an access node control protocol.

Further, the layer two device comprises a Resource Control Enforcement Function (RCEF), which is used for enforcing the layer two device policy.

The present invention provides a policy control method and system for a layer two device. In this method and system, a layer two device policy is generated by RACS and sent down to IP Edge Node, and then the IP Edge Node notifies the layer two device of the layer two policy; by adopting this method and system, policy control for the layer two device is easy to be operated and realized, the maintenance is more simple, and the cost of maintenance is reduced.

### BRIEF DESCRIPTION OF THE DRAWINGS

Fig. 1 is a diagram illustrating the structure of Resource and Admission Control Subsystem (RACS) of ETSI in existing technology;
Fig. 2 is a diagram illustrating the networking for policy control in a DSL access network in existing technology;
Fig. 3 is a flowchart illustrating the interacting process of policy control for a layer two device in existing technology;
Fig. 4 is a diagram illustrating the networking for policy control in a DSL access network in the embodiment of the present invention; and
Fig. 5 is a flowchart illustrating the interacting process of policy control for a layer two device in the embodiment of the present invention.

### DETAILED DESCRIPTION

Technical scheme of the present invention will be illustrated in further details hereinafter with reference to the drawings and embodiments.

The core idea of the present invention is that: after generating a layer two device policy, RACS sends the generated layer two device policy down to IP Edge Node, and the IP Edge Node notifies the layer two device of the layer two device policy.

The present invention will be illustrated in detail hereinafter with reference to the drawings and specific embodiments.

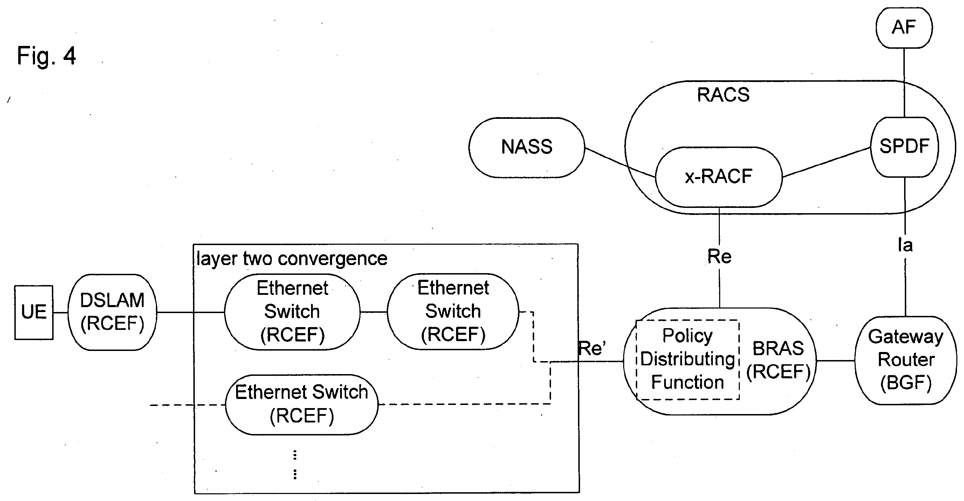

As shown in Fig. 4, taking the most common DSL access network for example, as to a layer two device (e.g., DSLAM, convergence switch), it is RACS that generates the layer two device policy dynamically according to resource request, user subscription information and resource availability status obtained from transport layer function, and then x-RACF sends the policy down to IP Edge Node (which is BRAS in this example) via Re interface, and the policy distributing function of IP Edge Node distributes the policy via Re' interface by taking use of layer two control mechanism, and the RCEF function of the layer two device enforces the policy.

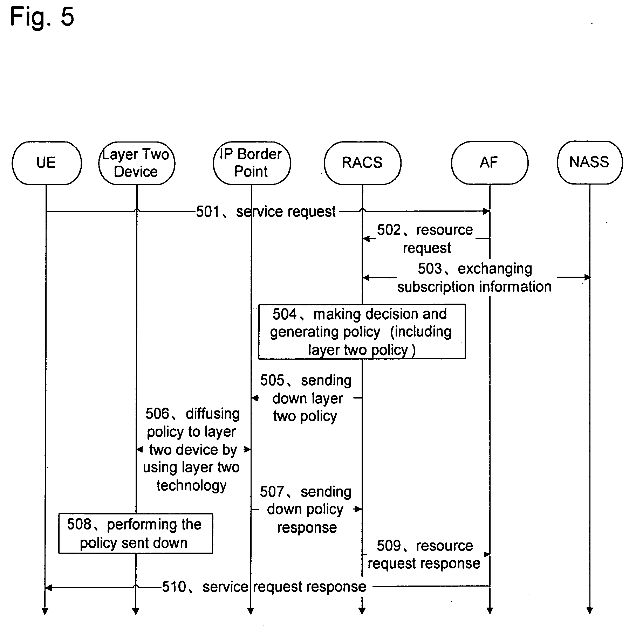

As shown in Fig. 5, the method of policy control for a layer two device comprises the following steps:
step 501, UE initiates a service request toAF;
step 502, AF initiates a resource request to RACS according to the required resource of service;
step 503, RACS and NASS exchange subscription information of the user;
step 504, RACS makes the final admission decision according to the received resource request, the user subscription information and current resource availability status obtained from transport layer function, and respectively generates a layer two device policy and a layer three device policy, wherein content of the layer two device policy may comprise: policy ID (used for identifying the policy uniquely), policy type (identifying it as a layer two device policy or a layer three device policy), user ID (used for uniquely determining the user, such as IP address, MAC address and so on), flow description (information for describing the flow, which can be an IP quinary set, or layer two information like Virtual Local Area Network Tag (VLAN TAG) etc), QoS information (bandwidth, QoS level and so on) and other information (gating etc);
step 505, as to a layer three device policy, which is sent down to IP Edge Node by x-RACF via Re interface and to BGF by SPDF via la interface; as to a layer two device policy, it is also sent to IP Edge Node by x-RACF via Re interface;
   when a layer two device policy is sent down to IP Edge Node, this layer two device policy and the layer three device policy can be sent down by organizing in one message, or be sent down in different messages respectively;
step 506, after receiving the policy, if IP Edge Node determines that this policy is a layer two device policy according to the policy type, according to the policy content and networking status of the connected layer two network, the policy distributing function of IP Edge Node will distribute the layer two policy to corresponding layer two device (namely the layer two device that service flow will pass through) via Re' interface by taking use of layer two control mechanism, such as Access Node Control Protocol (ANCP), or as to an Ethernet network, extend an Ethernet-based sub protocol, for instance: a kind of sub protocol type is extended based on Ethernet protocol multicast message, the format of which is: protocol type, message length, message content (some Attribute Value Pair (AVP) describing the policy);
step 507, after finishing distributing the layer two device policy, IP Edge Node may return a sending down policy response message to RACS;
   IP Edge Node may return the response to RACS after confirming that all corresponding layer two devices related to the layer two device policy have received the policy and have responded, or may also return the response to RACS after the layer two device policy is distributed out;
step 508, after receiving the layer two device policy, according to the content of the policy, the layer two device identifies related user service flow, which is controlled by policy control of QoS related control or gating etc;
step 509, RACS returns a resource request response to AF;
step 510, AF returns a service request response to the user.

The above embodiment takes the current most common DSL access network for example to illustrate the present invention, and other types of access network have similar process, which are not to be illustrated hereby.

The present invention also provides a policy control system for layer two device, comprising a Resource and Admission Control Subsystem (RACS), a layer two device and IP Edge Node;

RACS is used for sending the layer two device policy down to IP Edge Node after generating the layer two device policy, and the layer two device policy comprises: policy ID, policy type, user ID, flow description, Quality of Service (QoS) information and gating information; the IP Edge Node is used for notifying the layer two device of the layer two device policy; the layer two device is used for receiving and enforcing the layer two device policy, and may comprise Resource Control Enforcement Function (RCEF), which can be used for enforcing the layer two device policy, and the layer two device can be an Ethernet switch.

Wherein, the IP Edge Node is a Broadband Remote Access Server (BRAS), which comprises policy distributing function, and this policy distributing function can be used for notifying the layer two device of the layer two device policy.

The above-mentioned RACS is used for generating a layer two device policy dynamically according to resource request, user subscription information and resource availability status obtained from transport layer function, and sending this layer two device policy down to the IP Edge Node by generic Resource and Admission Control Function (x-RACF) via Re interface.

The above-mentioned RACS is also used for generating a layer three device policy dynamically according to resource request, user subscription information and resource availability status obtained from transport layer function, and this layer two device policy and the layer three device policy can be sent down to IP Edge Node by organizing in one message, or in different messages respectively;

After receiving the layer two device policy, according to information in the policy and networking status of the layer two network connected to this IP Edge Node, the IP Edge Node distributes the layer two device policy to corresponding layer two devices by the policy distributing function via Re' interface by taking use of the layer two control mechanism, which is the access node control protocol.

To sum up, by adopting method and system of the present invention, policy control for a layer two device in an access network can be implemented.

### INDUSTRIAL APPLICABILITY

The present invention provides a policy control method and system for a layer two device. In this method and system, a layer two device policy is generated by RACS and is sent down to IP Edge Node, and then the IP Edge Node notifies the layer two device of the layer two policy; by adopting the method and system, policy control for the layer two device is easy to be operated and realized, the maintenance is more simple, and the cost of maintenance is reduced.

## Claims

1. A method for distributing a layer two device policy to a layer two device, comprising:
generating, by a Resource and Admission Control Subsystem, RACS, of Telecoms & Internet converged Services & Protocols for Advanced Networks, TISPAN, dynamically, the layer two device policy according to a resource request, user subscription information and a resource availability status obtained from a transport layer function;
wherein the layer two device policy comprises: a policy ID used to identify the policy uniquely, a policy type identifying the policy as a layer two policy or a layer three policy, a user ID used for uniquely determining the user a flow description, Quality of Service, QoS, information and gating information;
sending, by the RACS, the layer two device policy down to an IP Edge Node; and
notifying, by the IP Edge Node, the layer two device of the layer two device policy;
receiving and enforcing, by the layer two device, the layer two device policy.

2. The method according to claim 1, wherein the notifying, by the IP Edge Node, the layer two device of the layer two device policy comprises:
notifying, by a policy distributing function of the IP Edge Node, the layer two device of the layer two device policy.

3. The method according to claim 1 or claim 2, wherein,
the IP Edge Node is a Broadband Remote Access Server, BRAS, and the layer two device is an Ethernet switch.

4. The method according to claim 1, wherein,
sending, by the RACS, the layer two device policy down to the IP Edge Node by a generic Resource and Admission Control Function, x-RACF, via a Re interface.

5. The method according to claim 1, wherein,
generating, by the RACS, a layer three device policy dynamically according to a resource request, user subscription information and a resource availability status obtained from a transport layer function;
sending, by the RACS, the layer two device policy and layer three device policy, which are organized in one message or in different messages respectively, down to the IP Edge Node.

6. The method according to claim 2, wherein,
after the IP Edge Node has received the layer two device policy, according to information in the policy and networking status of the layer two network connected to IP Edge Node, the policy distributing function sends, via a Re' interface, the layer two device policy down to a corresponding layer two device by using an access point control protocol.

7. The method according to claim 1, wherein the enforcing, by the layer two device, the layer two device policy comprises:
enforcing, by a Resource Control Enforcement Function, RCEF, on the layer two device, the layer two device policy.

8. A system for distributing a layer two policy to a layer two device, comprising a Resource and Admission Control Subsystem, RACS, of Telecoms & Internet converged Services & Protocols for Advanced Networks, TISPAN, and a layer two device, and further comprising an IP Edge Node;
the RACS is configured to generate the layer two device policy dynamically according to a resource request, user subscription information and a resource availability status obtained from a transport layer function and send the layer two device policy down to the IP Edge Node;
wherein the layer two device policy comprises: a policy ID used to identify the policy uniquely, a policy type identifying the policy as a layer two policy or a layer three policy, a user ID used for uniquely determining the user a flow description, Quality of Service, QoS, information and gating information;
the IP Edge Node is configured to notify the layer two device of the layer two device policy;
the layer two device is configured to receive and enforce the layer two device policy.

9. The system according to claim 8, wherein,
the IP Edge Node comprises a policy distributing function, and the policy distributing function is configured to notify the layer two device of the layer two device policy.

10. The system according to claim 8 or claim 9, wherein,
the IP Edge Node is a Broadband Remote Access Server, BRAS, and the layer two device is an Ethernet switch.

11. The system according to claim 8, wherein,
the RACS is configured to send the layer two device policy down to the IP Edge Node by a generic Resource and Admission Control Function, x-RACF, via a Re interface.

12. The system according to claim 8, wherein,
the RACS is configured to generate a layer three device policy dynamically according to a resource request, user subscription information and a resource availability status obtained from transport layer function;
the RACS is configured to send the layer two device policy and layer three device policy, which are organized in one message or in different messages respectively, down to the IP Edge Node.

13. The system according to claim 9, wherein,
after the IP Edge Node has received the layer two device policy, according to information in the policy and networking status of the layer two network connected to IP Edge Node, the policy distributing function sends, via a Re' interface, the layer two device policy down to a corresponding layer two device by using an access node control protocol.

14. The system according to claim 8, wherein,
the layer two device comprises a Resource Control Enforcement Function, RECF, and the RCEF is configured to enforce the layer two device policy.

## Patentansprüche

1. Verfahren zur Verbreitung einer Schicht-Zwei-Geräterichtlinie auf ein Schicht-Zwei-Gerät, welches Folgendes umfasst:
dynamisches Generieren, durch ein Resource and Admission Control Subsystem, RACS, von Telecoms and Internet converged Services and Protocols for Advanced Networks, TISPAN, der Schicht-Zwei-Geräterichtlinie entsprechend einer Ressourcenanfrage, Benutzerteilnehmerinformationen und eines Ressourcenverfügbarkeitsstatus, welcher aus einer Transportschichtfunktion erhalten wurde;
wobei die Schicht-Zwei-Geräterichtlinie umfasst Folgendes: eine Richtlinien-ID, welche genutzt wird, um die Richtlinie eindeutig zu identifizieren, einen Richtlinientyp, welcher die Richtlinie als eine Schicht-Zwei-Richtlinie oder eine Schicht-Drei-Richtlinie identifiziert, eine Benutzer-ID, welche genutzt wird, um den Benutzer eindeutig zu bestimmen, eine Flussbeschreibung, Quality of Service-, QoS, Informationen und Gating-Informationen;
Senden, durch das RACS, der Schicht-Zwei-Geräterichtlinie hinab an einen IP Edge Node; und
Benachrichtigen, durch den IP Edge Node, des Schicht-Zwei-Geräts über die Schicht-Zwei-Geräterichtlinie;
Empfangen und Durchsetzen, durch das Schicht-Zwei-Gerät, der Schicht-Zwei-Geräterichtlinie.

2. Verfahren nach Anspruch 1, wobei das Benachrichtigen, durch den IP Edge Node, des Schicht-Zwei-Geräts über die Schicht-Zwei-Geräterichtlinie Folgendes umfasst:
Benachrichtigen, durch eine Richtlinienverbreitungsfunktion des IP Edge Node, des Schicht-Zwei-Geräts über die Schicht-Zwei-Geräterichtlinie.

3. Verfahren nach Anspruch 1 oder Anspruch 2, wobei
der IP Edge Node ein Broadband Remote Access Server, BRAS, und das Schicht-Zwei-Gerät ein Ethernet-Switch ist.

4. Verfahren nach Anspruch 1, umfassend
das Senden, durch das RACS, der Schicht-Zwei-Geräterichtlinie hinab an den IP Edge Node durch eine generische Resource and Admission Control Function, x-RACF, via eine Re-Schnittstelle.

5. Verfahren nach Anspruch 1, umfassend
dynamisches Generieren, durch das RACS, einer Schicht-Drei-Geräterichtlinie entsprechend einer Ressourcenanfrage, Benutzerteilnehmerinformationen und eines Ressourcenverfügbarkeitsstatus, welcher aus einer Transportschichtfunktion erhalten wurde;
Senden, durch das RACS, der Schicht-Zwei-Geräterichtlinie und Schicht-Drei-Geräterichtlinie, welche in einer Nachricht oder in jeweils verschiedenen Nachrichten organisiert sind, hinab an den IP Edge Node.

6. Verfahren nach Anspruch 2, wobei
nachdem der IP Edge Node die Schicht-ZweiGeräterichtlinie empfangen hat, entsprechend Informationen in der Richtlinie und des Netzwerkstatus des mit dem IP Edge Node verbundenen Schicht-Zwei-Netzwerks, die Richtlinienverbreitungsfunktion, via eine Re'-Schnittstelle, die Schicht-Zwei-Geräterichtlinie unter Verwendung eines ZugangspunktSteuerprotokolls hinab an ein entsprechendes Schicht-Zwei-Gerät sendet.

7. Verfahren nach Anspruch 1, wobei das Durchsetzen, durch das Schicht-Zwei-Gerät, der Schicht-Zwei-Richtlinie Folgendes umfasst:
Durchsetzen, durch eine Resource Control Enforcement Function, RCEF, der Schicht-Zwei-Geräterichtlinie auf dem Schicht-Zwei-Gerät.

8. System zur Verbreitung einer Schicht-Zwei-Richtlinie auf ein Schicht-Zwei-Gerät, welches ein Resource and Admission Control Subsystem, RACS, von Telecoms and Internet converged Services and Protocols for Advanced Networks, TISPAN, und ein Schicht-Zwei-Gerät umfasst, und des Weiteren einen IP Edge Node umfasst;
das RACS ist dazu konfiguriert, die Schicht-Zwei-Geräterichtlinie entsprechend einer Ressourcenanfrage, Benutzerteilnehmerinformationen und eines Ressourcenverfügbarkeitsstatus, welcher aus einer Transportschichtfunktion erhalten wurde, dynamisch zu generieren und die Schicht-Zwei-Geräterichtlinie hinab an den IP Edge Node zu senden;
wobei die Schicht-Zwei-Geräterichtlinie umfasst Folgendes: eine Richtlinien-ID, welche genutzt wird, um die Richtlinie eindeutig zu identifizieren, einen Richtlinientyp, welcher die Richtlinie als eine Schicht-Zwei-Richtlinie oder eine Schicht-Drei-Richtlinie identifiziert, eine Benutzer-ID, welche genutzt wird, um den Benutzer eindeutig zu bestimmen, eine Flussbeschreibung, Quality of Service-, QoS, Informationen und Gating-Informationen;
der IP Edge Node ist dazu konfiguriert, das Schicht-Zwei-Gerät über die Schicht-Zwei-Geräterichtlinie zu benachrichtigen;
das Schicht-Zwei-Gerät ist dazu konfiguriert, die Schicht-Zwei-Geräterichtlinie zu empfangen und durchzusetzen.

9. System nach Anspruch 8, wobei
der IP Edge Node eine Richtlinienverbreitungsfunktion umfasst und die Richtlinienverbreitungsfunktion dazu konfiguriert ist, das Schicht-Zwei-Gerät über die Schicht-Zwei-Geräterichtlinie zu benachrichtigen.

10. System nach Anspruch 8 oder Anspruch 9, wobei der IP Edge Node ein Broadband Remote Access Server, BRAS, und das Schicht-Zwei-Gerät ein Ethernet-Switch ist.

11. System nach Anspruch 8, wobei
das RACS dazu konfiguriert ist, die Schicht-Zwei-Geräterichtlinie durch eine generische Resource and Admission Control Function, x-RACF, via eine Re-Schnittstelle hinab an den IP Edge Node zu senden.

12. System nach Anspruch 8, wobei
das RACS dazu konfiguriert ist, eine Schicht-Drei-Geräterichtlinie entsprechend einer Ressourcenanfrage, Benutzerteilnehmerinformationen und eines Ressourcenverfügbarkeitsstatus, welcher aus einer Transportschichtfunktion erhalten wurde, dynamisch zu generieren;
das RACS dazu konfiguriert ist, die Schicht-Zwei-Geräterichtlinie und Schicht-Drei-Geräterichtlinie, welche in einer Nachricht oder in jeweils verschiedenen Nachrichten organisiert sind, hinab an den IP Edge Node zu senden.

13. System nach Anspruch 9, wobei
nachdem der IP Edge Node die Schicht-ZweiGeräterichtlinie empfangen hat, entsprechend Informationen in der Richtlinie und des Netzwerkstatus des mit dem IP Edge Node verbundenen Schicht-Zwei-Netzwerks, die Richtlinienverbreitungsfunktion, via eine Re'-Schnittstelle, die Schicht-Zwei-Geräterichtlinie unter Verwendung eines Zugangspunkt-Steuerprotokolls hinab an ein entsprechendes Schicht-Zwei-Gerät sendet.

14. System nach Anspruch 8, wobei
das Schicht-Zwei-Gerät eine Resource Control Enforcement Function, RCEF, umfasst, und die RCEF dazu konfiguriert ist, die Schicht-Zwei-Geräterichtlinie durchzusetzen.

## Revendications

1. Méthode de distribution d'une politique de dispositif de couche deux à un dispositif de couche deux, comprenant :
la génération de manière dynamique, par un sous-système de commande de ressource et d'admission, RACS, de protocoles et services de télécommunications et d'internet convergents pour les réseaux avancés, TISPAN, de la politique du dispositif de couche deux selon une demande de ressource, des informations de souscription d'utilisateur et un statut de disponibilité de ressource obtenu à partir d'une fonction de couche de transport ;
dans laquelle la politique du dispositif de couche deux comprend : un ID de politique utilisé pour identifier la politique de manière unique, un type de politique identifiant la politique comme une politique de couche deux ou une politique de couche trois, un ID utilisateur utilisé pour déterminer de manière unique l'utilisateur, une description de flux, des informations en matière de qualité de service, QoS, et des informations de synchronisation ;
l'envoi, par le RACS, de la politique du dispositif de couche deux à un noeud de bord IP ; et
la notification, par le noeud de bord IP, du dispositif de couche deux de la politique du dispositif de couche deux ;
la réception et la mise en vigueur, par le dispositif de couche deux, de la politique du dispositif de couche deux.

2. Méthode selon la revendication 1, dans laquelle la notification, par le noeud de bord IP, du dispositif de couche deux de la politique du dispositif de couche deux comprend :
la notification, par une fonction de distribution de politique du noeud de bord IP, du dispositif de couche deux de la politique du dispositif de couche deux.

3. Méthode selon la revendication 1 ou la revendication 2, dans laquelle
le noeud de bord IP est un serveur d'accès à distance à bande large, BRAS, et le dispositif de couche deux est un commutateur Ethernet.

4. Méthode selon la revendication 1, comprenant
l'envoi, par le RACS, de la politique du dispositif de couche deux au noeud de bord IP par une fonction de commande de ressource et d'admission générique, x-RACF, via une interface Re.

5. Méthode selon la revendication 1, comprenant
la génération, par le RACS, d'une politique de dispositif de couche trois de manière dynamique selon une demande de ressource, des informations de souscription d'utilisateur et un statut de disponibilité de ressource obtenu à partir d'une fonction de couche de transport ;
l'envoi, par le RACS, de la politique de dispositif de couche deux et de la politique de dispositif de couche trois qui sont organisées en un seul message ou en différents messages, respectivement, au noeud de bord IP.

6. Méthode selon la revendication 2, dans laquelle, une fois que le noeud de bord IP a reçu la politique de dispositif de couche deux selon les informations de la politique et de l'état réseau du réseau de couche deux connecté au noeud de bord IP, la fonction de distribution de politique envoie, via une interface Re', la politique du dispositif de couche deux à un dispositif de couche deux correspondant en utilisant un protocole de commande de point d'accès.

7. Méthode selon la revendication 1, dans laquelle la mise en vigueur, par le dispositif de couche deux, de la politique de dispositif de couche deux comprend :
la mise en vigueur, par une fonction de mise en vigueur de commande de ressource, RCEF, sur le dispositif de couche deux, de la politique du dispositif de couche deux.

8. Système de distribution d'une politique de couche deux à un dispositif de couche deux, comprenant un sous-système de commande de ressource et d'admission, RACS, de protocoles et services de télécommunications et d'internet convergents pour les réseaux avancés, TISPAN, et un dispositif de couche deux, et comprenant en outre un noeud de bord IP ;
le RACS est configuré pour générer la politique du dispositif de couche deux de manière dynamique selon une demande de ressource, des informations de souscription d'utilisateur et un statut de disponibilité de ressource obtenu auprès d'une fonction de couche de transport et envoyer la politique du dispositif de couche deux au noeud de bord IP ;
dans lequel la politique du dispositif de couche deux comprend un ID de politique utilisé pour identifier la politique de manière unique, un type de politique identifiant la politique comme une politique de couche deux ou une politique de couche trois, un ID utilisateur utilisé pour déterminer de manière unique l'utilisateur, une description de flux, des informations en matière de qualité de service, QoS, et des informations de synchronisation ;
le noeud de bord IP est configuré pour notifier le dispositif de couche deux de la politique du dispositif de couche deux ;
le dispositif de couche deux est configuré pour recevoir et mettre en vigueur la politique du dispositif de couche deux.

9. Système selon la revendication 8, dans lequel le noeud de bord IP comprend une fonction de distribution de politique et la fonction de distribution de politique est configurée pour notifier le dispositif de couche deux de la politique du dispositif de couche deux.

10. Système selon la revendication 8 ou la revendication 9, dans lequel
le noeud de bord IP est un serveur d'accès à distance à bande large, BRAS, et le dispositif de couche deux est un commutateur d'Ethernet.

11. Système selon la revendication 8, dans lequel
le RACS est configuré pour envoyer la politique du dispositif de couche deux au noeud de bord IP par une fonction de commande de ressource et d'admission générique, x-RACF, via une interface Re.

12. Système selon la revendication 8, dans lequel
le RACS est configuré pour générer une politique de dispositif de couche trois de manière dynamique selon une demande de ressource, des informations de souscription d'utilisateur et un statut de disponibilité de ressource obtenu à partir d'une fonction de couche de transport ;
le RACS est configuré pour envoyer la politique du dispositif de couche deux et la politique du dispositif de couche trois qui sont organisées dans un seul message ou dans différents messages, respectivement, au noeud de bord IP.

13. Système selon la revendication 9, dans lequel,
une fois que le noeud de bord IP a reçu la politique du dispositif de couche deux, selon les informations dans la politique et dans l'état réseau du réseau de couche deux connecté au noeud de bord IP, la fonction de distribution de politique envoie, via une interface Re', la politique du dispositif de couche deux à un dispositif de couche deux correspondant en utilisant un protocole de commande de noeud d'accès.

14. Système selon la revendication 8, dans lequel
le dispositif de couche deux comprend une fonction de mise en vigueur de commande de ressource, RCEF, et le RCEF est configuré pour mettre en vigueur la politique du dispositif de couche deux.
